# DEMANDE DE BREVET EUROPEEN

(11) **EP 3 462 058 A1**
(43) Date de publication de la demande: **03.04.2019**
(21) Numéro de dépôt: 18195212.8
(22) Date de dépôt: 18.09.2018
(51) Int. Cl.: F16H 3/091, F16H 3/10

(54) **DISPOSITIF DE TRANSMISSION DE VITESSE AVEC MARCHE ARRIERE POUR LE DEPLACEMENT D'UN VEHICULE AUTOMOBILE, NOTAMMENT D'UN VEHICULE MOTORISE A AU MOINS DEUX-ROUES**

(30) Priorité: 28.09.2017 FR 1759029
(71) Demandeur: IFP Energies nouvelles, 92852 Rueil-Malmaison Cedex (FR)
(72) Inventeur: VENTURI, Stephane, 07100 ROIFFIEUX (FR); LE BERR, Fabrice, 92500 RUEIL MALMAISON (FR); MILOSAVLJEVIC, Misa, 95610 ERAGNY SUR OISE (FR); ZITO, Gianluca, 75005 PARIS (FR)
(74) Mandataire: IFP Energies nouvelles

(57) **Abrégé**

La présente invention concerne un dispositif de transmission pour véhicules automobiles, notamment véhicule motorisé à au moins deux-roues, comprenant un arbre moteur portant au moins deux roues dentées menantes dont la liaison avec ledit arbre est contrôlée par un accouplement, un arbre récepteur portant au moins deux roues dentées menées avec une liaison avec ledit arbre contrôlée par un accouplement et un arbre intermédiaire de transmission de mouvement portant des roues dentées fixes coopérant avec les roues dentées de l'arbre moteur et de l'arbre récepteur. Le dispositif comprend des moyens de transmission entre l'arbre intermédiaire et l'arbre récepteur ainsi qu'un accouplement à commande contrôlée porté par l'arbre récepteur et commandant la liaison de cet arbre récepteur avec les moyens de transmission.

## Description

La présente invention se rapporte à un dispositif de transmission de vitesse pour le déplacement d'un véhicule automobile, notamment d'un véhicule motorisé à au moins deux-roues, ainsi qu'à un groupe motopropulseur utilisant ce dispositif de transmission de vitesse.

Dans l'exemple décrit dans le document FR 3 027 990 du demandeur, ce dispositif de transmission de vitesse comprend un arbre moteur placé sensiblement parallèlement à un arbre récepteur qui est généralement utilisé pour entraîner la ou les roues motrices du véhicule ainsi qu'un arbre intermédiaire transmission de mouvement placé entre l'arbre moteur et l'arbre récepteur.

Dans ce dispositif de transmission, l'arbre moteur porte deux roues dentées menantes, l'arbre récepteur porte deux roues dentées menées et l'arbre intermédiaire porte des roues dentées fixes coopérant avec les roues dentées de l'arbre moteur et de l'arbre récepteur,

Dans ce type de transmission, l'arbre moteur est entraîné en rotation par le moteur thermique et porte, de manière fixe, les deux roues dentées qui sont chacune en prise avec des roues dentées fixes portées par l'arbre intermédiaire qui sont elles-mêmes en prise avec les roues dentées portées par l'arbre récepteur. Les arbres portent également des accouplements qui permettent de rendre solidaires en rotation les roues dentées menantes et/ou réceptrices avec les arbres qui les portent.

Ainsi en fonctionnement, le véhicule est entrainé en déplacement à différentes vitesses en agissant sur les différents accouplements que portent les arbres moteur et/ou récepteur pour solidariser une des roues dentées de l'arbre moteur avec une des roues dentées réceptrices de cet arbre récepteur.

Ce dispositif de transmission bien que donnant satisfaction présente néanmoins des inconvénients non négligeables.

En effet, comme mieux décrit dans la demande de brevet précitée, il est nécessaire, pour obtenir un déplacement du véhicule en marche arrière, d'utiliser une machine électrique qui entraîne l'un des arbres dans un mouvement de rotation inverse.

L'implantation de cette machine électrique et des organes de liaison avec l'arbre concerné augmentent le coût de réalisation du dispositif et peuvent être la source de pannes et/ou de dysfonctionnements.

De plus, cette machine doit être contrôlée par une unité de calcul, comme le calculateur que comporte habituellement le moteur, ce qui nécessite d'augmenter la capacité de ce calculateur.

La présente invention se propose de remédier aux inconvénients mentionnés ci-dessus grâce à un dispositif de transmission de vitesse de réalisation simple et peu coûteuse.

La présente invention concerne un dispositif de transmission pour véhicules automobiles, notamment véhicule motorisé à au moins deux-roues, comprenant un arbre moteur portant au moins deux roues dentées menantes dont la liaison avec ledit arbre est contrôlée par un accouplement, un arbre récepteur portant au moins deux roues dentées menées avec une liaison avec ledit arbre contrôlée par un accouplement et un arbre intermédiaire de transmission de mouvement portant des roues dentées fixes coopérant avec les roues dentées de l'arbre moteur et de l'arbre récepteur. Le dispositif comprend des moyens de transmission entre l'arbre intermédiaire et l'arbre récepteur ainsi qu'un accouplement à commande contrôlée porté par l'arbre récepteur et commandant la liaison de cet arbre récepteur avec les moyens de transmission.

Selon un mode de réalisation, les moyens de transmissions comportent un train d'engrenages.

Avantageusement, ledit train d'engrenages comprend un pignon primaire porté par l'arbre intermédiaire, et une roue dentée portée par l'arbre récepteur.

Alternativement, ledit train d'engranges comprend un pignon primaire porté par l'arbre intermédiaire, une roue dentée portée par un arbre secondaire et une roue dentée portée par l'arbre récepteur.

Conformément à une mise en oeuvre, les moyens de transmission comportent une roue dentée portée par l'arbre intermédiaire, une roue dentée portée par un arbre secondaire, et une bande fermée passant autour d'une roue dentée portée par l'arbre secondaire et d'une roue dentée portée par l'arbre récepteur.

Selon un aspect, les moyens de transmission comportent une roue dentée portée par l'arbre intermédiaire, une roue dentée portée par l'arbre récepteur et une bande fermée passant autour des roues dentées.

De manière avantageuse, un fourreau en coopération avec une roue dentée menée par l'intermédiaire d'une roue libre, porte une surface d'accouplement pour coopérer avec ledit accouplement à commande contrôlé.

Conformément à un mode de réalisation, le dispositif de transmission de vitesse comprend au moins une bande fermée sur elle-même reliant les roues dentées, de préférence le dispositif de transmission de vitesse comprend une bande fermée sur elle-même pour chaque roue dentée menante. Avantageusement, la bande fermée sur elle-même comprend une chaîne. Alternativement, la bande fermée sur elle-même comprend une courroie.

Selon un aspect, l'accouplement à commande contrôlée est apte à être commandé dans deux positions d'accouplement et une position neutre.

Selon une configuration, le dispositif de transmission comprend au moins un accouplement unidirectionnel agencé entre une roue dentée menante et ledit arbre moteur.

Selon une mise en oeuvre, le dispositif de transmission comprend au moins un accouplement unidirectionnel agencé entre une roue dentée menée et ledit fourreau.

En outre, l'invention concerne un groupe motopropulseur, notamment pour véhicule automobile à au moins deux roues, comprenant un moteur à combustion interne, un dispositif de transmission de vitesse et une voie motrice. Il comprend un dispositif de transmission de vitesse selon l'une des caractéristiques précédentes.

D'autres caractéristiques et avantages de la transmission selon l'invention, apparaîtront à la lecture de la description ci-après d'exemples non limitatifs de réalisations, en se référant aux figures annexées et décrites ci-après.

Les figures 1a et 1b illustrent une transmission selon un premier mode de réalisation de l'invention.

Les figures 2a et 2b illustrent une transmission selon un deuxième mode de réalisation de l'invention.

Les figures 3a à 3c illustrent une transmission selon un troisième mode de réalisation de l'invention.

Les figures 4a à 4c illustrent une transmission selon un quatrième mode de réalisation de l'invention.

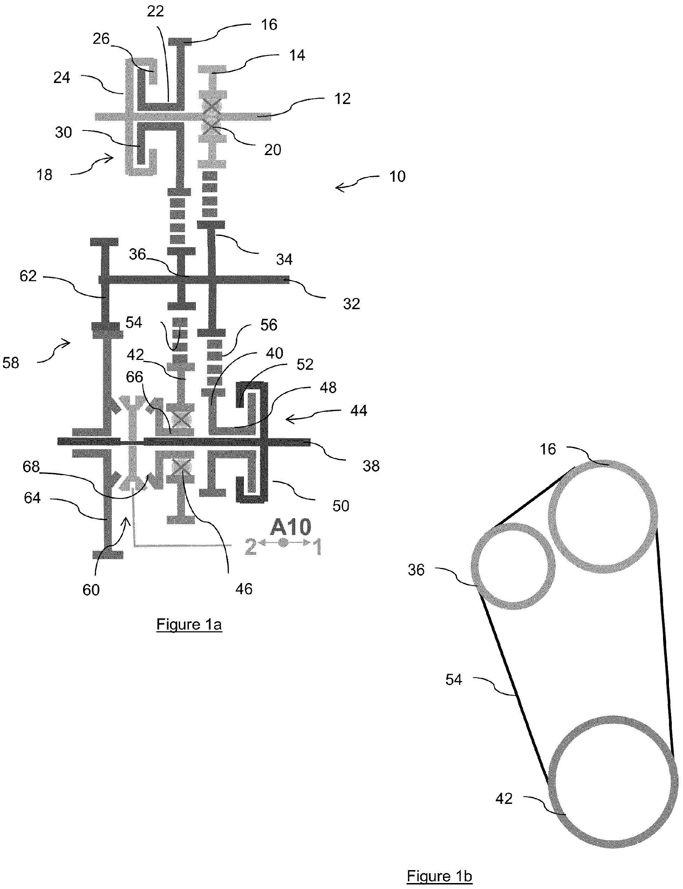

Comme illustré sur les figures 1a et 1b, de manière schématique et non limitative, le dispositif de transmission de vitesse 10 comprend un arbre moteur 12 portant deux roues dentées de diamètres différents 14 et 16 et un accouplement débrayable 18.

En considérant cette figure, la petite roue dentée 14 est placée sur l'arbre moteur 12 en y interposant un accouplement unidirectionnel 20, comme une roue libre. A gauche de cette petite roue dentée (en considérant la figure) est placée l'autre roue dentée 16 (ou grande roue dentée) sur un fourreau 22 entourant l'arbre 12 en étant libre en rotation sur cet arbre mais fixe en translation. L'accouplement débrayable 18, ici un accouplement débrayable à commande contrôlée, comme un embrayage à disque de friction, comprend un plateau de réaction 24 fixe sur l'arbre, un plateau de pression 26, libre en translation mais fixe en rotation avec le plateau de réaction, en étant commandé en déplacement vers le plateau de réaction par tous moyens connus, comme des leviers (non représentés), et un disque de friction 30 libre en translation sur le fourreau 22 mais fixe en rotation en étant placé entre le plateau de pression et le plateau de réaction.

Pour des raisons de simplification dans la suite de la description, les roues dentées 14 et 16 sont dénommées roues dentées menantes.

Ce dispositif de transmission de vitesse comprend également un arbre intermédiaire de transmission de mouvement de rotation 32, placé sensiblement parallèlement à l'arbre moteur 12 et qui porte deux roues dentées 34 et 36 fixes sur cet arbre et de diamètre différent en engrenant avec les roues dentés de l'arbre moteur. La roue dentée 34 (grande roue dentée intermédiaire) de cet arbre de liaison coopère avec la petite roue dentée menante 14 et la roue dentée 36 (petite roue dentée intermédiaire) coopère avec la grande roue dentée menante 16.

Ce dispositif de transmission de vitesse comprend aussi, sensiblement parallèlement à l'arbre moteur 12 et à l'arbre intermédiaire 32, un arbre récepteur 38 qui porte, comme pour l'arbre moteur 12, deux roues dentées 40 et 42 de diamètre différent et un accouplement débrayable à commande contrôlée 44, ici (de manière non limitative) un embrayage à disque de friction.

Les roues dentées et l'accouplement sont placés sur l'arbre récepteur 38 d'une façon symétrique à celle de l'arbre moteur 12.

Ainsi, la roue dentée 42 (grande roue dentée menée) est placée sur l'arbre 38 au travers d'un accouplement unidirectionnel 46 et d'un fourreau 66 (pièce tournant autour de l'arbre récepteur 38, portant la roue libre 46 et pouvant être couplée à l'arbre 38 par le mécanisme d'accouplement 60), , la roue dentée 40 (petite roue dentée menée) est placée sur un fourreau 48 entourant l'arbre récepteur 38 en étant libre en rotation sur cet arbre mais fixe en translation. Comme pour l'embrayage 18 de l'arbre moteur, l'accouplement débrayable 44 est ici un embrayage à friction avec un plateau de réaction 50 fixe sur l'arbre récepteur, un plateau de pression 52, libre en translation mais fixe en rotation avec le plateau de réaction, en étant commandé en déplacement vers le plateau de réaction par tous moyens connus, comme des leviers (non représentés), et un disque de friction libre en translation sur le fourreau 48 mais fixe en rotation.

Comme mieux visible sur la figure 1a, la grande roue menée 42 engrène avec la petite roue intermédiaire 36 alors que la petite roue menée 40 engrène avec la grande roue intermédiaire 34.

Bien entendu et cela sans sortir du cadre de l'invention, les accouplements débrayables 18 et 44 ne sont pas limités aux embrayages à disque de friction comme décrits ci-dessus mais peuvent concerner des accouplements automatiques ; comme des embrayages centrifuges.

Selon un mode de réalisation de l'invention, et comme montré sur les figures 1a et 1b, les différentes roues sont reliées entre elles par une bande fermée sur elle-même, comme une chaîne ou une courroie, de préférence crantée intérieurement et/ou extérieurement. Cette configuration permet un positionnement optimisé des arbres, et permet aussi d'obtenir des rapports indépendants.

La figure 1b permet d'illustrer un exemple de répartition spatiale des arbres moteur 12, intermédiaire 32 et récepteur 38.

En particulier, la figure 1b illustre la liaison par une bande 54 des roues dentées 16, 36 et 42. Les trois roues dentées 16, 36 et 42 sont agencées à l'intérieur de la bande 54. De cette manière, les trois roues dentées 16, 36 et 42 tournent dans le même sens de rotation. Ainsi, il est prévu une chaîne 54 pour relier la grande roue dentée menante 16, la petite roue dentée intermédiaire 36 et la grande roue dentée menée 42, et une chaîne 56 pour relier la petite roue menante 14, la grande roue dentée intermédiaire 34 et la petite roue menée 40. La bande 56 reliant les roues dentées 14, 34 et 40 est montée de la même manière que la bande 54.

Cette chaîne peut également être remplacée par une courroie crantée intérieurement et extérieurement qui coopère avec des roues munies de crans complémentaires.

Pour le mode de transmission de la figure 1a, le dispositif de transmission comprend des moyens de transmission 58 entre l'arbre intermédiaire 32 et l'arbre récepteur 38 ainsi qu'un accouplement à commande contrôlée 60 porté par l'arbre récepteur et commandant la liaison de cette arbre récepteur avec le train d'engrenages, et qui peut être utilisé pour réaliser un mouvement en marche arrière du véhicule. Avantageusement, l'accouplement à commande contrôlée 60 est un accouplement multidirectionnel, pouvant prendre trois positions :
- une première position, dite position neutre ou point mort, dans laquelle aucun accouplement n'est mis en oeuvre, dans cette position, la transmission se trouve au point mort,
- une deuxième position (déplacement vers la gauche selon la figure 1a), dans laquelle un accouplement est réalisé entre les moyens de transmission 58 et l'arbre récepteur 38, et
- une troisième position (déplacement vers la droite selon la figure 1a), dans laquelle un accouplement est réalisé entre le fourreau 66 et l'arbre récepteur 38, dans cette position, on retrouve le fonctionnement standard de la transmission avec quatre rapports. Dans ce but, ledit fourreau 66 porte une surface d'accouplement 68 pour coopérer avec ledit accouplement à commande contrôlé 60.

Selon un aspect de l'invention, l'accouplement à commande contrôlée 60 peut être un accouplement à crabots, ou un accouplement synchrone.

Les moyens de transmission 58 comprennent un train d'engrenage formé d'un pignon primaire 62 fixe avec l'arbre intermédiaire 32, et d'une roue dentée 64 portée librement en rotation par l'arbre récepteur 38. Le pignon primaire 62 engrène directement avec la roue dentée 64. Ce train d'engrenages comprend une roue dentée supplémentaire par rapport aux moyens d'entraînement précédemment décrits (transmission par bandes fermées à engrènement extérieur), c'est pourquoi, ce train d'engrenages permet une inversion du sens de rotation de l'arbre récepteur 38 par rapport aux moyens d'entraînement précédemment décrits (transmission par bandes fermées à engrènement extérieur).

Ainsi, l'arbre récepteur 38 peut être entraîné dans les deux sens de rotation :
- quand l'accouplement à commande contrôlée 60 est contrôlé pour permettre l'accouplement entre le fourreau 66 et l'arbre récepteur 38, ou au point mort, et avec un contrôle adapté des accouplements débrayables à commande contrôlée 18 et 44, alors l'arbre récepteur 38 est entraîné dans le sens de la marche avant du véhicule,
- quand l'accouplement à commande contrôlé 60 est contrôlé pour permettre l'accouplement entre la roue dentée 64 et l'arbre récepteur 38, alors l'arbre récepteur 38 est entraîné dans le sens de la marche arrière du véhicule (en prenant la précaution de maintenir l'embrayage 44 ouvert).

Le dispositif de transmission de vitesse selon le premier mode de réalisation de l'invention illustré aux figures 1a et 1b, permet deux rapports en marche arrière : un premier lorsque l'accouplement débrayable à commande contrôlée 18 reste ouvert et l'accouplement débrayable à commande contrôlée 44 reste ouvert, et un deuxième lorsque l'accouplement débrayable à commande contrôlée 18 reste fermé et l'accouplement débrayable à commande contrôlée 44 reste ouvert.

Ainsi, pour le premier rapport en marche arrière, l'accouplement débrayable à commande contrôlée 44 reste ouvert pour éviter la destruction de la transmission. Avec l'accouplement à commande contrôlée 60 en position accouplée avec la roue dentée 64 (déplacement de la pièce mobile de l'accouplement à commande contrôlé 60 vers la gauche selon la figure 1a), et l'accouplement débrayable à commande contrôlée 18 ouvert, l'arbre moteur 12 de la transmission entraine la roue dentée 14 par l'intermédiaire de la roue libre 20, qui entraîne à son tour l'arbre intermédiaire 32 par l'intermédiaire de la chaîne 56 et de la roue dentée 34. La roue dentée 62 de l'arbre intermédiaire 32 entraîne alors en sens opposé la roue dentée 64 de l'arbre récepteur 38 par l'accouplement à commande contrôlée 60. Le véhicule évolue alors en marche arrière.

Dans un même temps, la roue dentée 16 tourne folle autour de l'arbre moteur 12, et la roue dentée 40 tourne folle autour de l'arbre récepteur 38.

Pour le deuxième rapport de marche arrière, l'accouplement débrayable à commande contrôlée 44 reste ouvert pour éviter la destruction de la transmission. Avec l'accouplement à commande contrôlée 60 en position accouplée avec la roue dentée 64 (déplacement de la pièce mobile de l'accouplement à commande contrôlé 60 vers la gauche selon la figure 1a), et l'accouplement débrayable à commande contrôlée 18 fermé, l'arbre moteur 12 de la transmission entraine la roue dentée 16 par l'intermédiaire de l'accouplement débrayable 18, qui entraîne à son tour l'arbre intermédiaire 32 par l'intermédiaire de la chaîne 54 et de la roue dentée 36. La roue dentée 62 de l'arbre intermédiaire 32 entraîne alors en sens opposé la roue dentée 64 de l'arbre récepteur 38 par l'accouplement à commande contrôlée 60. Le véhicule évolue alors en marche arrière.

Dans le même temps, la roue dentée 40 tourne folle autour de l'arbre récepteur 38, et la roue dentée 14 tourne folle autour de l'arbre moteur 12

De plus, le véhicule est entrainé en marche avant à différentes vitesses en agissant sur les différents accouplements débrayables 18 et 44 que portent les arbres moteur et/ou récepteur pour solidariser une des roues dentées de l'arbre moteur avec une des roues dentées réceptrices de cet arbre récepteur. Ce fonctionnement en marche avant reste identique au fonctionnement décrit dans le brevet FR 3 027 990.

Selon un mode de réalisation de l'invention, une fonction de frein de parking peut être mise en oeuvre par fermeture de l'accouplement débrayable 44 et par accouplement 60 de la roue dentée 64 avec l'arbre récepteur 38 par l'intermédiaire de l'accouplement à commande contrôlée 60. En effet, le sens de rotation imposé à l'arbre récepteur 38 par l'accouplement 60 est opposé à celui imposé par l'accouplement 44, ce qui rend tout mouvement impossible entre les deux arbres 38 et 32. Dans cette configuration, le véhicule ne peut alors se déplacer, car au moins une roue du véhicule est liée à l'arbre récepteur 38.

Cette conception du dispositif de transmission permet donc quatre rapports en marche avant, deux rapports en marche arrière et une fonction de frein de parking, au moyen d'une conception simple et peu coûteuse. En effet, le dispositif de transmission selon l'invention ne nécessite pas de machine électrique pour mettre en oeuvre la marche arrière.

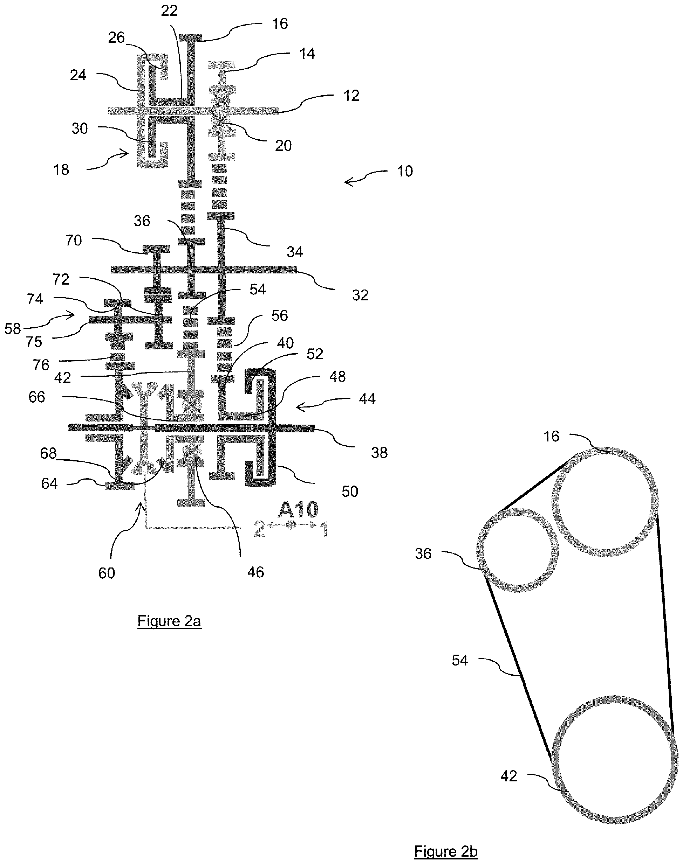

Les figures 2a et 2b illustrent, schématiquement et de manière non limitative, un deuxième mode de réalisation de l'invention. Le deuxième mode de réalisation diffère du premier mode de réalisation par des moyens de transmission 58 différents.

Les éléments identiques au premier mode de réalisation (figures 1a et 1b) portent les mêmes signes de référence et ne sont pas détaillés.

Pour le deuxième mode de réalisation, les moyens de transmission 58 comprennent une roue dentée 70 sur l'arbre intermédiaire 32, deux roues dentées 72 et 74 sur un arbre secondaire 75, une roue dentée 64 sur l'arbre récepteur 38 et une bande 76 fermée sur elle-même. Les roues dentées 72 et 74 sont solidairement fixées (c'est-à-dire sans accouplement) sur l'arbre secondaire 75.

La roue dentée 70 de l'arbre intermédiaire 32 engrène avec la roue dentée 72 de l'arbre secondaire 75. De plus, la roue dentée 74 de l'arbre secondaire 75 coopère avec la roue dentée 64 de l'arbre récepteur 38 au moyen de la bande 76 fermée sur elle-même.

Selon une alternative à ce deuxième mode de réalisation, une liaison par bande fermée peut être prévue entre l'arbre intermédiaire 32 et l'arbre secondaire 75, et une liaison par roues dentées peut être prévue entre l'arbre secondaire 75 et l'arbre récepteur 38.

Ces moyens de transmission 58 comprennent une roue dentée supplémentaire par rapport aux moyens d'entraînement précédemment décrits (transmission par bandes fermées à engrènement extérieur), c'est pourquoi, ces moyens de transmission permettent une inversion du sens de rotation de l'arbre récepteur 38 par rapport aux moyens d'entraînement précédemment décrits (transmission par bandes fermées à engrènement extérieur).

Ainsi, l'arbre récepteur 38 peut être entraîné dans les deux sens de rotation :
- quand l'accouplement à commande contrôlée 60 est contrôlé pour permettre l'accouplement entre le fourreau 66 et l'arbre récepteur 38, ou au point mort, et avec un contrôle adapté des accouplements débrayables à commande contrôlée 18 et 44, alors l'arbre récepteur 38 est entraîné dans le sens de la marche avant du véhicule,
- quand l'accouplement à commande contrôlé 60 est contrôlé pour permettre l'accouplement entre la roue dentée 64 et l'arbre récepteur 38, alors l'arbre récepteur 38 est entraîné dans le sens de la marche arrière du véhicule (en prenant la précaution de maintenir l'embrayage 44 ouvert), au moyen de la rotation de l'arbre secondaire 75 et de la bande 76.

De la même manière que pour le premier mode de réalisation, le dispositif de transmission de vitesse selon le deuxième mode de réalisation de l'invention illustré aux figures 2a et 2b, permet deux rapports en marche arrière : un premier lorsque l'accouplement débrayable à commande contrôlée 18 reste ouvert et l'accouplement débrayable à commande contrôlée 44 reste ouvert, et un deuxième lorsque l'accouplement débrayable à commande contrôlée 18 reste fermé et l'accouplement débrayable à commande contrôlée 44 reste ouvert.

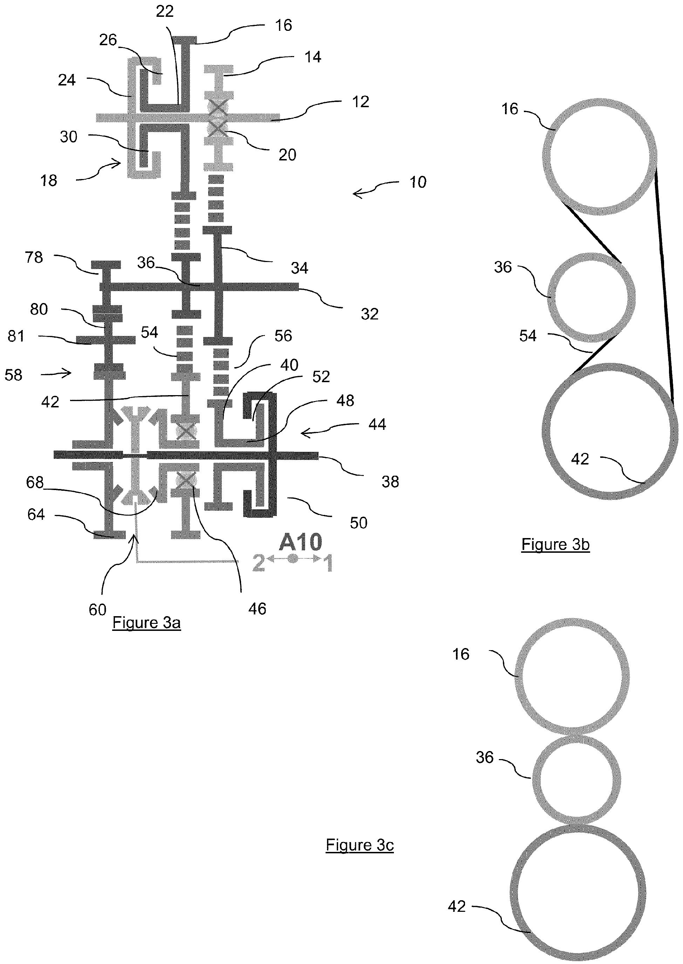

Les figures 3a, 3b et 3c illustrent, schématiquement et de manière non limitative, un troisième mode de réalisation de l'invention. Le troisième mode de réalisation diffère du premier mode de réalisation par des moyens de transmission 58 différents et par un entraînement différent de l'arbre intermédiaire. La figure 3b illustre une première variante du troisième mode de réalisation, et la figure 3c illustre une deuxième variante du troisième mode de réalisation.

Les éléments identiques au premier mode de réalisation (figures 1a et 1b) portent les mêmes signes de référence et ne sont pas détaillés.

Pour le troisième mode de réalisation, les moyens de transmission 58 comprennent un pignon denté 78 sur l'arbre intermédiaire 32, une roue dentée 80 sur un arbre secondaire 81, et une roue dentée 64 sur l'arbre récepteur 38.

Le pignon denté 78 de l'arbre intermédiaire 32 engrène avec la roue dentée 80 de l'arbre secondaire 81, qui engrène avec la roue dentée 64 de l'arbre récepteur 38.

Pour ce troisième mode de réalisation, l'arbre intermédiaire 32 a un sens de rotation opposé au sens de rotation de l'arbre moteur 12 et de l'arbre récepteur 38.

La figure 3b illustre une première variante de ce troisième mode de réalisation permettant d'obtenir un sens de rotation opposé pour l'arbre intermédiaire 32. Pour cette première variante, les roues dentées 16 et 42 sont agencées à l'intérieur de la bande 54 et la roue 36 est agencée à l'extérieur de la bande 54. La bande 56 reliant les roues dentées 14, 34 et 40 est montée de la même manière que la bande 54.

La figure 3c illustre une deuxième variante de ce troisième mode de réalisation permettant d'obtenir un sens de rotation opposé pour l'arbre intermédiaire 32. Pour cette seconde variante, aucune bande 54 et 56 n'est utilisée, et la transmission des mouvements se fait au moyen de trains d'engrenages : avec les roues dentées 16, 36 et 42 d'une part, et avec les roues dentées 14, 34 et 40 d'autre part.

Ainsi, les moyens de transmission 58 comprennent une roue dentée supplémentaire par rapport aux moyens d'entraînement précédemment décrits correspondant à la marche avant, c'est pourquoi, ces moyens de transmission permettent une inversion du sens de rotation de l'arbre récepteur 38 par rapport aux moyens d'entraînement précédemment décrits.

Ainsi, l'arbre récepteur 38 peut être entraîné dans les deux sens de rotation :
- quand l'accouplement à commande contrôlée 60 est contrôlé pour permettre l'accouplement entre le fourreau 66 et l'arbre récepteur 38, ou au point mort, et avec un contrôle adapté des accouplements débrayables à commande contrôlée 18 et 44, alors l'arbre récepteur 38 est entraîné dans le sens de la marche avant du véhicule,
- quand l'accouplement à commande contrôlé 60 est contrôlé pour permettre l'accouplement entre la roue dentée 64 et l'arbre récepteur 38, alors l'arbre récepteur 38 est entraîné dans le sens de la marche arrière du véhicule (en prenant la précaution de maintenir l'embrayage 44 ouvert), au moyen de la rotation de l'arbre secondaire 81.

De la même manière que pour le premier mode de réalisation, le dispositif de transmission de vitesse selon le troisième mode de réalisation de l'invention illustré aux figures 3a, 3b et 3c, permet deux rapports en marche arrière : un premier lorsque l'accouplement débrayable à commande contrôlée 18 reste ouvert et l'accouplement débrayable à commande contrôlée 44 reste ouvert, et un deuxième lorsque l'accouplement débrayable à commande contrôlée 18 reste fermé et l'accouplement débrayable à commande contrôlée 44 reste ouvert.

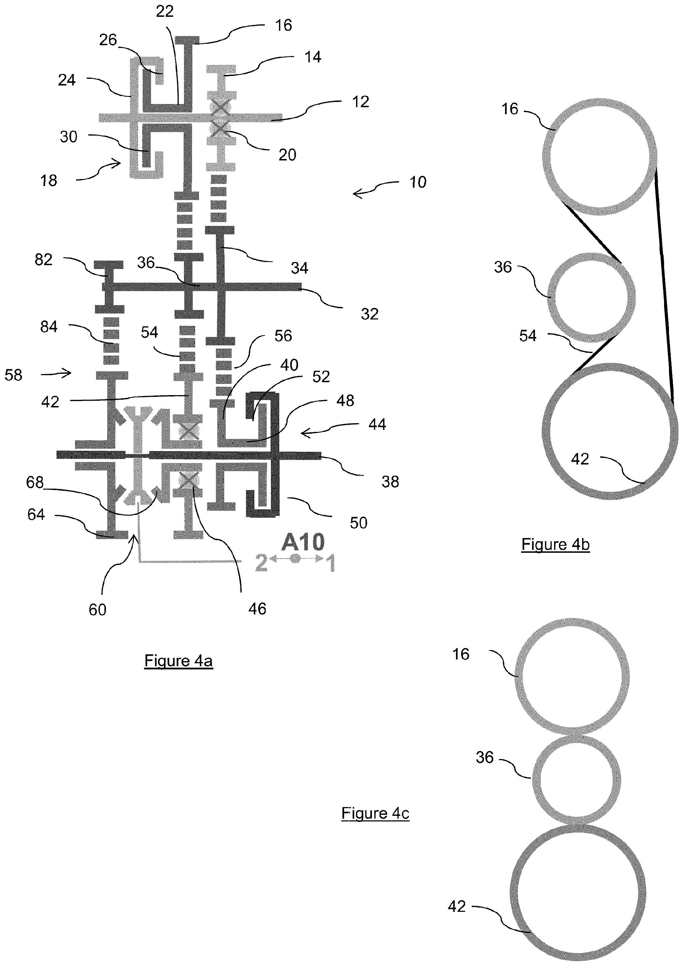

Les figures 4a, 4b et 4c illustrent, schématiquement et de manière non limitative, un quatrième mode de réalisation de l'invention. Le quatrième mode de réalisation diffère du premier mode de réalisation par des moyens de transmission 58 différents. La figure 4b illustre une première variante du quatrième mode de réalisation, et la figure 4c illustre une deuxième variante du quatrième mode de réalisation.

Les éléments identiques au premier mode de réalisation (figures 1a et 1b) portent les mêmes signes de référence et ne sont pas détaillés.

Pour le quatrième mode de réalisation, les moyens de transmission 58 comprennent une roue dentée 82 sur l'arbre intermédiaire 32, une roue dentée 64 sur l'arbre récepteur 38 et une bande 84 fermée sur elle-même.

La roue dentée 82 de l'arbre intermédiaire 32 entraîne en rotation la roue dentée 64 de l'arbre récepteur 38 au moyen de la bande 84 fermée sur elle-même.

Pour ce quatrième mode de réalisation, l'arbre intermédiaire 32 a un sens de rotation opposé au sens de rotation de l'arbre moteur 12 et de l'arbre récepteur 38.

La figure 4b illustre une première variante de ce troisième mode de réalisation permettant d'obtenir un sens de rotation opposé pour l'arbre intermédiaire 32. Pour cette première variante, les roues dentées 16 et 42 sont agencées à l'intérieur de la bande 54 et la roue 36 est agencée à l'extérieur de la bande 54. La bande 56 reliant les roues dentées 14, 34 et 40 est montée de la même manière que la bande 54.

La figure 4c illustre une deuxième variante de ce quatrième mode de réalisation permettant d'obtenir un sens de rotation opposé pour l'arbre intermédiaire 32. Pour cette seconde variante, aucune bande 54 et 56 n'est utilisée, et la transmission des mouvements se fait au moyen de trains d'engrenages : avec les roues dentées 16, 36 et 42 d'une part, et avec les roues dentées 14, 34 et 40 d'autre part.

Ainsi, ces moyens de transmission 58 différent des transmissions au moyen des roues dentées 16, 36 et 42 et 14, 34 et 40, c'est pourquoi, ces moyens de transmission permettent une inversion du sens de rotation de l'arbre récepteur 38 par rapport aux moyens d'entraînement précédemment décrits.

Ainsi, l'arbre récepteur 38 peut être entraîné dans les deux sens de rotation :
- quand l'accouplement à commande contrôlée 60 est contrôlé pour permettre l'accouplement entre le fourreau 66 et l'arbre récepteur 38, ou au point mort, et avec un contrôle adapté des accouplements débrayables à commande contrôlée 18 et 44, alors l'arbre récepteur 38 est entraîné dans le sens de la marche avant du véhicule,
- quand l'accouplement à commande contrôlé 60 est contrôlé pour permettre l'accouplement entre la roue dentée 64 et l'arbre récepteur 38, alors l'arbre récepteur 38 est entraîné dans le sens de la marche arrière du véhicule (en prenant la précaution de maintenir l'embrayage 44 ouvert), au moyen de la rotation de la roue dentée secondaire 82.

De la même manière que pour le premier mode de réalisation, le dispositif de transmission de vitesse selon le quatrième mode de réalisation de l'invention illustré aux figures 4a, 4b et 4c, permet deux rapports en marche arrière : un premier lorsque l'accouplement débrayable à commande contrôlée 18 reste ouvert et l'accouplement débrayable à commande contrôlée 44 reste ouvert, et un deuxième lorsque l'accouplement débrayable à commande contrôlée 18 reste fermé et l'accouplement débrayable à commande contrôlée 44 reste ouvert.

La présente invention concerne également un groupe motopropulseur d'un véhicule automobile, notamment un véhicule à au moins deux roues, le groupe motopropulseur comprend le dispositif de transmission de vitesse 10 selon une variante de réalisation de l'invention.

Le groupe comprend un moteur de propulsion, par exemple un moteur à combustion interne, le dispositif de transmission de vitesse et une voie motrice du véhicule.

L'arbre moteur 12 du dispositif 10 peut être relié au vilebrequin du moteur à combustion interne et l'arbre récepteur 38 peut être connecté à la voie motrice du véhicule.

A titre d'exemple, pour un véhicule à deux ou trois roues, cet arbre récepteur peut être relié à la roue motrice (ou aux roues motrices) directement au travers d'une chaîne, d'une courroie ou d'un train d'engrenages ou indirectement par un essieu moteur portant les roues motrices.

Avantageusement, le groupe motopropulseur avec le dispositif de transmission de vitesse selon un mode de réalisation de l'invention peut être utilisé sur un véhicule de type hybride avec l'association d'une machine motrice/génératrice au moteur à combustion interne.

## Revendications

1. Dispositif de transmission pour véhicules automobiles, notamment véhicule motorisé à au moins deux-roues, comprenant un arbre moteur (12) portant au moins deux roues dentées menantes (14, 16) dont la liaison avec ledit arbre est contrôlée par un accouplement (18), un arbre récepteur (38) portant au moins deux roues dentées menées (40, 42) avec une liaison avec ledit arbre contrôlée par un accouplement (44) et un arbre intermédiaire de transmission de mouvement (32) portant des roues dentées (34, 36) fixes coopérant avec les roues dentées de l'arbre moteur (14, 16) et de l'arbre récepteur (42, 40), **caractérisé en ce que** le dispositif comprend des moyens de transmission (58) entre l'arbre intermédiaire (32) et l'arbre récepteur (38) ainsi qu'un accouplement à commande contrôlée (60) porté par l'arbre récepteur (38) et commandant la liaison de cet arbre récepteur (38) avec les moyens de transmission (58).

2. Dispositif de transmission selon la revendication 1, **caractérisé en ce que** les moyens de transmissions (58) comportent un train d'engrenages.

3. Dispositif de transmission selon la revendication 2, **caractérisé en ce que** ledit train d'engrenages (58) comprend un pignon primaire (62) porté par l'arbre intermédiaire (32), et une roue dentée (64) portée par l'arbre récepteur (38).

4. Dispositif de transmission selon la revendication 2, **caractérisé en ce que** ledit train d'engranges (58) comprend un pignon primaire (78) porté par l'arbre intermédiaire (32), une roue dentée (80) portée par un arbre secondaire (81) et une roue dentée (64) portée par l'arbre récepteur (38).

5. Dispositif de transmission selon la revendication 1, **caractérisé en ce que** les moyens de transmission (58) comportent une roue dentée (70) portée par l'arbre intermédiaire (32), une roue dentée (72) portée par un arbre secondaire (75), et une bande fermée (76) passant autour d'une roue dentée (74) portée par l'arbre secondaire (75) et d'une roue dentée (64) portée par l'arbre récepteur (38).

6. Dispositif de transmission selon la revendication 1, **caractérisé en ce que** les moyens de transmission (58) comportent une roue dentée (82) portée par l'arbre intermédiaire (32), une roue dentée (64) portée par l'arbre récepteur (38) et une bande fermée (84) passant autour des roues dentées (82) et (64).

7. Dispositif de transmission selon l'une des revendications précédentes, dans lequel un fourreau (66) en coopération avec une roue dentée menée (42) par l'intermédiaire d'une roue libre (46), porte une surface d'accouplement (68) pour coopérer avec ledit accouplement à commande contrôlé (60).

8. Dispositif de transmission selon l'une des revendications précédentes, **caractérisé en ce que** le dispositif de transmission de vitesse (10) comprend au moins une bande fermée sur elle-même (54, 56) reliant les roues dentées (14, 34, 40 ; 16, 36, 42), de préférence le dispositif de transmission de vitesse (10) comprend une bande fermée sur elle-même (54, 56) pour chaque roue dentée menante (14, 16).

9. Dispositif de transmission selon la revendication 8, **caractérisé en ce que** la bande fermée sur elle-même (54, 56) comprend une chaîne.

10. Dispositif de transmission selon la revendication 8, **caractérisé en ce que** la bande fermée sur elle-même (54, 56) comprend une courroie.

11. Dispositif de transmission selon l'une des revendications précédentes, dans lequel l'accouplement à commande contrôlée (60) est apte à être commandé dans deux positions d'accouplement et une position neutre.

12. Dispositif de transmission selon l'une des revendications précédentes, dans lequel le dispositif de transmission comprend au moins un accouplement unidirectionnel (20) agencé entre une roue dentée menante (14) et ledit arbre moteur (12).

13. Dispositif de transmission selon l'une des revendications précédentes, dans lequel le dispositif de transmission comprend au moins un accouplement unidirectionnel (46) agencé entre une roue dentée menée (42) et ledit fourreau (66).

14. Groupe motopropulseur, notamment pour véhicule automobile à au moins deux roues, comprenant un moteur à combustion interne, un dispositif de transmission de vitesse (10) et une voie motrice, **caractérisé en ce qu'**il comprend un dispositif de transmission de vitesse (10) selon l'une des revendications précédentes.
